(19) Europäisches Patentamt / European Patent Office / Office européen des brevets

(11) **EP 2 557 830 B1**

(12) **EUROPEAN PATENT SPECIFICATION**

(45) Date of publication and mention
of the grant of the patent:
**09.07.2014 Bulletin 2014/28**

(51) Int Cl.:
**H04B 17/00** (2006.01)    *H04B 7/04* (2006.01)
**H04W 16/00** (2009.01)    *H04B 7/10* (2006.01)

(21) Application number: **11006594.3**

(22) Date of filing: **11.08.2011**

(54) **Method for predicting a MIMO throughput of an LTE downlink in a radio network planning tool**

Verfahren zum Vorhersagen eines MIMO-Durchsatzes eines LTE-Downlinks in einem Funknetzplanungswerkzeug

Procédé de prédiction de rendement MIMO de liaison descendante LTE dans un outil de planification de réseau radio

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2013 Bulletin 2013/07**

(73) Proprietor: **Deutsche Telekom AG**
**53113 Bonn (DE)**

(72) Inventors:
- **Beyer, Jürgen**
  **57250 Netphen (DE)**
- **Droste, Heinrich**
  **64380 Rossdorf (DE)**
- **Isensee, Ulrich, Dr.**
  **64297 Darmstadt (DE)**

(74) Representative: **Lehmann, Judith Christina**
**Hössle Patentanwälte**
**Partnerschaft**
**Bolzstraße 3**
**70173 Stuttgart (DE)**

(56) References cited:
**EP-A1- 2 341 646**

- **JURGEN BEYER ET AL: "A Measurement Based Approach to Spatially Predict the Orthogonality Factor of the UMTS Downlink", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696321, ISBN: 978-1-4244-2518-1**
- **ANONYMOUS: "LTE-Radio Network Planning with PegaPlan", INTERNET CITATION, 1 January 2010 (2010-01-01), pages 1-9, XP007919823, Retrieved from the Internet: URL:http://www.pegaware.com/fileadmin/Pega Web/content/autoren/data/news/LTE_radio_ne twork_planning_english.pdf [retrieved on 2011-11-28]**

EP 2 557 830 B1

## Description

## Technical Field

The present invention refers to a method for predicting a MIMO throughput of an LTE downlink in a radio network planning tool. The proposed method uses a model to predict the MIMO throughput. The present invention further refers to a respective system component, a respective radio network planning tool and a respective computer-readable medium.

## Background

A main request for a 3rd and 4th generation mobile communication system is to substantially increase the over-the-air transmission capacity. The so-called multiple-input multiple-output (MIMO) transmission technology is one of the main components in the up-coming mobile communication standard LTE to reach this goal. LTE stands for Long Term Evolution and represents a project of the 3rd Generation Partnership Project (3GPP).

Basically, any MIMO system efficiently exploits the frequency spectrum by transmitting independent data streams simultaneously in the same frequency domain. For the case of two data streams, two antennas are required at both the transmitter side, represented by an eNodeB, and the receiver side represented by a user equipment (UE). This transmission technology is used since decades in terrestrial point-to-point radio link systems as well as in satellite communication systems. In both cases, orthogonal polarised electro-magnetic waves are used for the independent data streams, e.g. horizontal and vertical polarisation. Both systems absolutely require two conditions to run reliably. First, line of sight (LOS) must exist between transmitting and receiving antenna. Second, both antennas generally have a very small beam width to reduce the impact of reflected wave components. Both conditions are not given in terrestrial public mobile communication systems. Therefore, MIMO has not yet been used in such networks. In order to introduce MIMO for public mobile radio networks, high sophisticated algorithms and a corresponding low-energy, powerful and small computer chip as required for public smart phones and other user equipments are required. Both is available now and MIMO is an essential part of LTE.

However, one constraint still further exists, namely, the propagation path of the independent MIMO data streams have to be uncorrelated. There are generally two possibilities to reach this: different polarised antennas or a sufficient distance between the transmission antennas. Since, as outlined in K. Werner et al, "Antenna Configurations for 4x4 MIMO in LTE-Field measurements", Proc. IEEE Vehic. Tech. Conf. 2010, Taipai, cross-polarised antennas yield a better performance and taking into account practical aspects, cross-polarised antennas are generally used in the LTE roll-out. The practical aspects comprise, for example, the fact that the cross-polarised antennas need only one quite small antenna cabinet.

Close to the transmission antennas, the propagation paths are uncorrelated. But with increasing distance between transmitter (TX) and receiver (RX), the co-polar wave is more and more also received from the cross-polar antenna.

This effect is called polarisation discrimination and caused by many propagation effects. Even for LOS due to scattering and reflection at, for example, building walls, the polarisation angle of co- and cross-polar waves varies differently leading to the previously described effect. The polarisation discrimination is much larger if none line of sight (NLOS) exists between TX and RX antenna. This is very often the case in urban areas. In the case of NLOS, no dominant propagation path exists and only reflected and/or diffracted waves are received leading to a significant decrease of the depolarisation between the MIMO propagation paths. Since MIMO is an essential component of LTE, it is also essential for a radio network planning tool to predict the MIMO throughput.

In the document "A measurement based approach to spatially predict the orthogonality factor of a UMTS downlink" by Jürgen Beyer and Heinz Droste, the use of commercial HSDPA measurements in order to derive an approach to predict the location based orthogonality factor is told. The authors found that the orthogonality factor is correlated with a difference between a free space path loss and a measured path loss. This approach includes a distance as well as the land usage dependency of the ratio path.

Further, the European patent application EP 2 341 646 A1 discloses a method and a system for prediciting a location based orthogonality factor in a UMTS downlink. For such a prediction, a difference between a predicted path loss and a free space path loss is applied, as well as a correlation between that difference, designated as excess path loss and an orthogonality factor. The European patent application discloses further the input values for the orthogonality factor derived from simultaneously HSDPA and pilot signal measurements based on a reliable mapping from a reported channel quality indicator to a ratio from carrier to interference power.

Therefore, it was an object of the present invention to provide an accurate method and a respective model for predicting the MIMO throughput of an LTE downlink in a respective radio network planning tool.

As previously discussed, the cross-polarisation properties of the MIMO propagation paths diminish with increasing distance TX-RX. This is described by a comprehensive empirical MIMO channel model as further explained in V. Erceg et al, "Multiple-Input Multiple-Output Fixed Wireless Radio Channel Measurements and Modeling Using Dual-Polarized Antennas at 2.5 GHz", IEEE Trans. on Wireless Communications, Vol. 3, No. 6, pp. 2288-2298, Nov. 2004. A theoretical model calculating explicitly the received power of randomly arranged scattering objects assuming low elevated RX antennas as described, for example, in S. Kwon, G. Stüber, "3-D Geometry-based Statistical Modeling of Cross-Polarization Discrimination in Wireless Communication Channels", Proc. IEEE Vehic. Tech. Conf. 2010, Taipei, confirms the results obtained in V. Erceg et al, "Multiple-Input Multiple-Output

Fixed Wireless Radio Channel Measurements and Modeling Using Dual-Polarized Antennas at 2.5 GHz", IEEE Trans. on Wireless Communications, Vol. 3, No. 6, pp. 2288-2298, Nov. 2004, for a distance beyond 1.3 km.

In NLOS urban environment scenarios, many de-polarising propagation effects influence the MIMO transmission even quite close to the TX antenna. Simulations applying a more statistical MIMO channel model taking into account propagation effects in urban environment show that the achieved MIMO transmission capacity in a realistic cellular network is significantly lower as if ideal propagation conditions are assumed as shown in A. Molisch, "A generic model for MIMO wireless propagation channels in Macro- and Microcells", IEEE Trans. on Signal Processing, Vol. 52, No. 1, pp. 61 to 71, Jan 2004. However, this model requires many input parameters describing, e.g. the dielectric properties of the building walls which are not known for complete cities. Therefore, this model is impractical for radio network planning tasks. Summarized it can be stated that models describing only a distance dependency of the MIMO performance reduction are not sufficient since they do not sufficiently take into account NLOS scenarios. Other models considering NLOS are too complicated and need too many generally unknown input parameters. Moreover, as far as the inventors are aware, other planning tools describe MIMO by applying different mappings throughput to SINR (signal to interference plus noise ratio) for MIMO and for the single stream case (SIMO, single-input multiple output, since RX diversity is always running). This is a practical and easy to use solution, but it might not fit to all cases since MIMO is a very sensitive technology which, in addition to SINR, depends on further propagation effects and it is expected that the MIMO throughput will be clearly different for line of sight (LOS) and non line of sight (NLOS). This is confirmed by respective measurements as shown later. That means, simply taking a different throughput to SINR tables for MIMO and SIMO is not a sufficient approach to predict the MIMO throughput in planning tools.

In the document "LTE Radio Network Planning with PegaPlan", published on the www.pegaware.com website in 2010 under the link http://www.peaaware.com/fileadmin/PegaWeb/content/autoren/data/news/LTE_radio_netw ork_planning_english.pdf, MIMO data rate prediction methods with PegaPlan planning tool are disclosed.

## Summary of the invention

A solution to the above-mentioned problem is given by the proposed method according to claim 1, the proposed system component according to claim 11, the radio network planning tool according to claim 12 and the proposed computer-readable medium according to claim 13 of the present patent application. Advantages and embodiments of the proposed method are described in the dependent claims.

A method for predicting a MIMO throughput of an LTE downlink in a radio network planning tool is proposed. The method, establishing a model, applies an excess path loss defined as difference of a free space path loss and an actual path loss of an electromagnetic wave at the respective mobile station's location and establishes a functional relation between the MIMO throughput and the excess path loss. The method uses as input a capacity gain due to a dual-stream MIMO system related to a single stream system and a pregiven mapping from a signal to interference plus noise ratio to a transmission capacity of the respective single stream system.

According to one embodiment of the proposed method, the method uses as a further input a mapping from a signal to interference plus noise ratio to a transmission capacity of the respective dual-stream MIMO system.

In the present disclosure, the terms "throughput", "capacity" and "transmission capacity" are used synonymously.

In order to predict the MIMO throughput according to the proposed method in an RF (radio frequency) planning tool, a suited look-up table has to be generated containing a mapping from a signal to interference plus noise ratio and an excess path loss to a MIMO throughput. Both, the excess path loss and the signal to interference plus noise ratio can be easily determined, generally both, the excess path loss and the signal to interference plus noise ratio, are computed. The functional relation between the MIMO throughput and the excess path loss can be derived from respective measurements. Mappings from a signal to interference plus noise ratio (SINR) to a transmission capacity of the respective single stream system and of the respective dual-stream MIMO system, respectively, are generally given by respective hardware system suppliers. However, those mapping tables do not contain any dependency between a MIMO throughput and an excess path loss. From the reported mapping tables, for a respective SINR value a MIMO throughput gain can be determined. Furthermore, from the respective measurements a functional relation between the capacity gain due to a dual-stream MIMO system related to a single stream system and the excess path loss can be established. For the MIMO throughput prediction this functional relation is to be normalised with respect to the SINR mapping tables under the condition that the maximum capacity gain of this functional relation corresponds to the capacity gain from the pregiven, e. g. reported SINR mapping tables for a respective SINR value. Such a normalised relation between the excess path loss and the capacity gain is used now to generate a row for the look-up table, a row containing the MIMO throughput values for a respective determined SINR value and different values of the excess path loss $L_{ex}$, which can be described as follows:

$$\text{MIMO throughput (SINR, } L_{ex}) = f(L_{ex})$$

That means that for a respective SINR value it is possible to derive a functional relation of the MIMO throughput and the excess path loss. Performing such procedure for multiple SINR values, a look-up table with respective multiple rows can be generated containing the required information about the dependency between the MIMO throughput and the signal to interference plus noise ratio and the excess path loss, respectively. Such a look-up table is to be entered in the model in order to be used to predict the MIMO throughput in the radio network planning tool.

According to a possible embodiment of the proposed method, the method, i.e. the model is implemented in the planning tool by entering a respective look-up table, i.e. a mapping table MIMO throughput to excess path loss and signal to interference plus noise ratio as described before. For each pixel, representing the respective mobile station's location, in a pregiven prediction area, the excess path loss and the signal to interference plus noise ratio is predicted and the corresponding MIMO throughput is derived from the mapping table.

In telecommunication, a free space path loss is defined as the loss in signal strength of an electromagnetic wave that would result from a line of sight path through free space. That means, that there are no obstacles nearby to cause reflection or diffraction. The free space path loss does not include factors such as the gain of antennas used at the transmitter and receiver, nor any loss associated with hardware imperfections. In contrast thereto, the actual path loss can be derived from measurements or can be predicted and takes into account all obstacles between the transmitter and the receiver location. The excess path loss ($L_{ex}$) can be represented by the following formula:

$$L_{ex} = L_{act} - L_{fs} \qquad \text{(in dB)} \qquad\qquad\qquad (1)$$

wherein $L_{act}$ represents the actual path loss at the respective receiver location, i.e. the respective mobile station location, and $L_{fs}$ represents the free space path loss at the same respective receiver location.

As already mentioned, $L_{act}$ is either derived from measurements or predicted by a radio frequency planning tool, whereas $L_{fs}$ is always predicted. The free space path loss can also be computed according to the formula:

$$L_{fs} = \left(\frac{4\pi d}{\lambda}\right)^2 = \left(\frac{4\pi d f}{c}\right)^2 \qquad\qquad\qquad (2)$$

wherein $\lambda$ is the signal wave length, f is the signal frequency, d is the distance from the respective transmitter and c the speed of light in a vacuum.

This equation is taken from Wikipedia and is only accurate in the far field where its spherical spreading can be assumed. That means, that it does not hold close to the transmitter. Via a well-known relation, the free space path loss can also be expressed in terms of dB.

For line of sight (LOS), $L_{act}$ is equal to $L_{fs}$ up to a certain distance. Beyond that point, $L_{act}$ increases more with increasing distance than $L_{fs}$ does, as further explained in document J. Beyer, R. Jacoby, "Two semi-empirical and fast prediction models for urban microcells compared with measurements at 919 and 1873 MHz", The second European Personal Mobile Communications Conference, Bonn, October 1997. For non light of sight (NLOS), $L_{act}$ is much greater than $L_{fs}$. That means, for LOS as well as for NLOS, that the proposed model which establishes a correlation between the excess path loss and the MIMO throughput fits well expectations found from a discussion that the MIMO performance/throughput decreases with increasing distance mobile-to-base station and the MIMO performance/throughput is further decreased for NLOS, even if the mobile station is close to the base station. That means, that generally, the path loss in the case of NLOS is much greater than for LOS. The greater the path loss the deeper is the mobile station in the NLOS region. In the case of LOS, the path loss increases with the distance mobile-to-base station.

A similar measure is used to predict a location dependent orthogonality factor for the UMTS downlink in radio network planning tools as further described in document J. Beyer, H. Droste, "A measurement based approach to spatially predict the orthogonality factor of the UMTS downlink", Proc. IEEE Vehic. Tech. Conf. 2010, Taipei.

Some advantages of the proposed method, i.e. the proposed model are the following ones:

- The model describes several propagation effects affecting the MIMO throughput in an empirical way.

- The model includes the length as well as the land usage of the radio path.

- The model requires only input data as generally calculated by empirical macro-cell propagation models.

- The numerical effort required additionally to the usual computations in RF planning tools is quite low.

- The basic relation of the model is verified by two different kinds or measurements: MIMO channel sounder measurements and LTE throughput measurements.

- The model includes the increase of the throughput due to MIMO. This enables to combine the information from the model with the SINR to throughput tables as generally given by RAN system supplier.

According to the proposed method, the model as described is implemented in the respective planning tool by entering respective input files with at least one mapping table comprising mapping relations between MIMO throughput and excess path loss and signal to interference plus noise ratio, respectively, predicting for each pixel in a pregiven prediction area the excess path loss and the signal to interference plus noise ratio and deriving the corresponding MIMO throughput from the at least one mapping table.

The at least one mapping table (look-up table) is generated as shortly described before and as further described in the following.

In addition to the channel properties, the MIMO throughput depends on the capabilities of the base station, also called eNodeB, as well as of the user equipment (UE). Therefore, the model does not directly include the MIMO throughput. Instead, the model describes a respective transmission capacity gain due to dual-stream MIMO system related to single stream system. That means, that the MIMO throughput and the respective at least one mapping table are determined in the radio network planning tool by using a functional relation between a measured transmission capacity gain due to dual-stream MIMO system related to single stream system and the excess path loss. The capacity gain is given by

$$\Delta C_{MIMO} = \frac{C_{MIMO} - C_{single\ stream}}{C_{single\ stream}} \bullet 100 \qquad (3)$$

where C generally represents a transmission capacity of a corresponding system.

If tables with SINR (signal and interference to noise ratio) to throughput are available, for example, from RAN system suppliers, for the single stream case as well as for the MIMO case, the MIMO throughput can be computed in a radio network planning tool by combining those tables with a respective transmission capacity gain which can be measured, in order to get therefrom the respective absolute value of the MIMO throughput.

According to a possible embodiment of the proposed method, the functional relation between the measured transmission capacity gain and the excess path loss is derived from plotting the measured transmission capacity gain against the excess path loss.

According to a further embodiment of the proposed method, a scatter plot resulting from the plotting is approximated in sections by respective straight lines resulting in the functional relation defined in sections.

The functional relation between the measured transmission capacity gain and the excess path loss is to be normalised with respect to a transmission capacity gain resulting from respective SINR look-up tables from the system's suppliers including a look-up table of MIMO throughput per SINR and SIMO (single-input multiple-output) throughput per SINR. This is to be done in order to take into account respective supplier information about the hardware systems which are used.

According to a further advantageous embodiment of the proposed method, the transmission capacity gain is determined on the basis of the so-called Shannon capacity of the MIMO system and the Shannon capacity of the single stream system.

In order to get absolute values for MIMO throughputs which are to be inserted in the at least one mapping table of the proposed model, for respective values of the excess path loss and respective values of the signal to interference plus noise ratio (SINR) respective values of the transmission capacity gain are combined with respective values of a transmission capacity of a single stream system which are taken from a pregiven mapping table (SINR look-up table) which is available, for example, from RAN system suppliers.

It is possible that the functional relation between the measured transmission capacity gain due to dual-stream MIMO system related to single stream system and the excess path loss is determined by using MIMO channel sounder measurements. Alternatively, the functional relation can also be found by LTE throughput measurements.

All measurements are to be carried out in urban environment in order to get realistic predictions for respective MIMO throughputs.

In a possible embodiment of the proposed method, the channel sounder measurements are carried out on a 2x2 MIMO system with cross-polarised antennas. "2x2"means that there are 2 antennas localized at a respective sender and 2 antennas localized at a respective receiver, thus allowing a transmission of 2 data streams.

According to a further embodiment of the proposed method, the LTE throughput measurements are carried out in an LTE field trial network, wherein the measurements are performed with two different network configurations, namely, 1) a dual-stream MIMO is enabled and 2) MIMO is disabled and only SIMO (single input multiple output) is possible.

The present invention further refers to a radio network planning tool configured for predicting a MIMO throughput of an LTE downlink in a radio network planning tool. The radio network planning tool including a model which is instantiated by a method as described before.

Moreover, a computer program with a program code is proposed with the help of which all steps of the proposed method can be carried out when the computer program is run on a computer or a corresponding calculating unit, which can be realized by a system component of a respective radio network planning tool. Furthermore, a computer-readable medium with a computer program stored thereon is proposed wherein the computer program comprises a program code which is suitable for carrying out all steps of the proposed method when the computer program is run on a computer or a corresponding calculating unit.

Details of one or more implementations are set forth in the accompanying drawings and the description below. Further features will be apparent from the description and the drawings and from the claims.

**Brief description of the drawings**

Figure 1 shows a plot showing a relative MIMO transmission capacity gain measured by channel sounder measurements versus excess loss path values of a single measurement route in Frankfurt.

Figure 2 shows a relative MIMO transmission capacity gain versus excess path loss values, 1) derived from channel sounder measurements for $\rho_{ref}$ = 10, 2) obtained from LTE throughput measurements.

Figure 3 shows the frequency of a signal-to-noise ratio in a target cell and of an LOS measurement campaign in Frankfurt (Alleen Ring) and,

Figure 4 shows the frequency of a measured throughput in the target cell and of the LOS measurement campaign in Frankfurt (Alleen Ring).

Figure 5 shows a flow-chart which schematically illustrates a possible embodiment of a generation of a look-up table which is to be entered in the model as proposed by the present invention in order to predict the MIMO throughput.

Figure 6 shows a flow-chart describing how the MIMO throughput in an RF planning tool can be predicted according to a possible embodiment of the proposed method.

**Detailed description of the drawings**

In order to verify the proposed model and to determine the basic relationship required for the model, namely, the functional relation between a measured transmission capacity gain due to dual-stream MIMO system related to single stream system and the excess path loss, two different measurement campaigns have been evaluated.

At first, a so-called Shannon capacity of a 2x2 MIMO system with cross-polarised (XP) antennas is derived from channel sounder measurements in urban environment at, for example, 2.6 GHz. At second, an investigation of LTE throughput measurements in an urban LTE field trial network will be described and the results of both investigations are compared.

Both campaigns are located in urban area and a 2x2 MIMO system with cross-polarised antennas is used. The MIMO transmission capacity gain is derived from both investigations, and it is shown that it is correlated with the excess path loss ($L_{ex}$).

A MIMO channel sounder measures the channel response matrix between all antennas at TX and RX side, as further described in R. S. Thomä et al, "Multidimensional High-Resolution Channel Sounder Measurement", in "Smart Antennas in Europe, State-of-the-Art", EURASIP Book Series on SP&C, Volume 3, Hindawi Publishing Corporation, 2005. This data enables various and flexible investigations in numerical post processes. One advantage of such investigations is that the results are available long time before LTE prototypes in the laboratory are built-up or even LTE networks exist. This is an essential point for LTE radio network planning since the planning tool algorithms have to be ready for planning the LTE network roll-out. Therefore, channel sounder measurements are used in order to find an approach to predict the MIMO throughput.

The measurements were carried out within the framework of the R&D project EASY-C which was funded by the German government. They were performed with a RUSK HyEff channel sounder as described in R. S. Thomä et al, "Multidimensional High-Resolution Channel Sounder Measurement", in "Smart Antennas in Europe, State-of-the-Art", EURASIP Book Series on SP&C, Volume 3, Hindawi Publishing Corporation, 2005 at a frequency of 2.53 GHz. The channel sounder uses a multi-tone test signal with 273 carriers leading to an over-all bandwith of 21 MHz. Three sites in the inner city of Dresden, Germany, were selected for the measurement campaign, each of them equipped with three sectors. Commercial LTE antennas were used consisting of pairs of XP antennas. The test signal was simultaneously transmitted via all sectors of one side.

The measurement routes are within an area of about 2x2 km around Dresden main station which can be regarded as dense urban environment. Since two sites have an antenna height of around 50 m, LOS is given along a quite large part of the measurement routes.

The channel sounder measurement gives a large amount of data which is not completely used for the investigations presented in the present disclosure. Instead, along the measurement routes every 4 m an evaluation location is taken and around this location a sample set of 20 snapshots, covering a path length of about 0.5 m is used for the next steps. As next, a 2x2 channel transfer matrix **H** is derived.

For each snapshot and for each of the 273 carriers k, the complex received amplitudes are represented by $a_k * \mathbf{H}_k$ with $\mathbf{H}_k$ normalised such that $E_{i,j}(|h_{k,ij}|^2) = 1$ where i,j indicates the matrix elements. The eigen-values $\lambda_{k,j}$ (j =1,2) of $\mathbf{H}_k^+ \mathbf{H}_k$ together with a set of signal-to noise ratios $\rho_k$ allow the computation of the Shannon capacities $C_{shan, k}$ for each carrier k by B. Holter, "On the capacity of the MIMO channel: A tutorial introduction", Proc. of IEEE Norewgian Symposium on Signal Processing, pp. 167 to 172, Trondheim, 2001. $\rho_k$ is defined in relation to a pre-selected reference value $\rho_{ref}$ by $\rho_k = \rho_{ref} * a_k^2 / E_k(a_k^2)$. Thus, $\rho_k$ is proportional to the frequency dependent received powers of the carrier k. They are scaled such that the average over all 273 is the selected reference $\rho_{ref}$. The results presented in the present disclosure are computed for $\rho_{ref}$.

Finally, in order to establish a representative capacity for the evaluation location, the Shannon capacity $C_{shan, k}$ per carrier is averaged over all carriers. Furthermore, to smooth rapid variations, it is averaged over the set of snapshots belonging to the evaluation location. As it is a capacity normalised to $\rho_{ref}$ it does not contain the strong dependency on the signal strength, but only the weaker variance due to the other channel characteristics.

While $C_{shan}$ is measured along a measurement route, a respective value for the excess path loss $L_{ex}$ is predicted using a semi-empirical propagation model taking into account three-dimensional (3D) building data. Such a model predicts precisely the rapid increase of $L_{ex}$ when the mobile station moves into a shadow region of buildings. Due to shadowing by a building, the predicted $L_{ex}$ increases significantly and $C_{shan}$ decreases clearly. Such investigations were done for several measurement routes and they show that a correlation exists between $C_{shan}$ and $L_{ex}$. From these measurements, it can be extracted a general dependency of the Shannon capacity on the excess path loss and according to the present invention, this knowledge is brought into an RF planning tool.

However, such a relationship between the Shannon capacity and the excess path loss is not directly suited to implement in an RF planning tool since the Shannon capacity is quite theoretic. In practice, network operators get tables with throughput over a respective signal-to-noise ratio (SINR) from a respective radio access network (RAN) supplier or from link level simulations. Those data can be used easily in a respective radio planning process as well. In order to combine those throughput to SINR tables with the obtained relationship between the MIMO capacity and the excess path loss, the relative MIMO capacity gain is introduced as described before:

$$\Delta C_{MIMO} = \frac{C_{shan,MIMO} - C_{shan,SISO}}{C_{shan,SISO}} \bullet 100 \qquad\qquad (4)$$

with

$C_{shan, MIMO}$ - Shannon capacity assuming a MIMO system. $C_{shan, SISO}$ - Shannon capacity assuming a SISO (single input single output) system.

In the present disclosure, the terms "relative MIMO capacity gain", "capacity gain", "MIMO capacity gain" and "MIMO transmission capacity gain" are used synonymously.

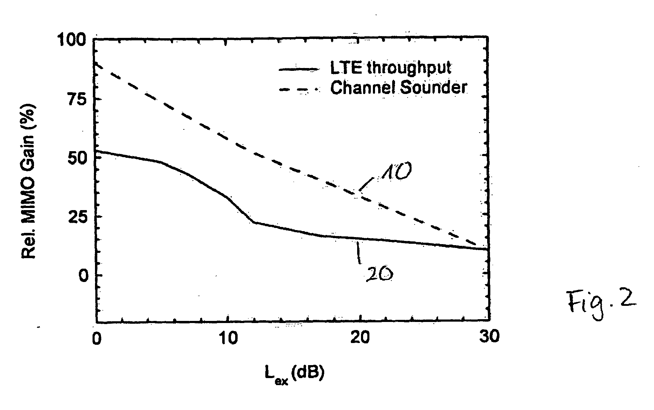

Performing some further evaluation steps, the relative MIMO transmission capacity gain can be extracted from the channel sounder measurements as shown by graph 10 in Figure 2. The MIMO capacity gain reaches its maximum of around 90 % for $L_{ex} = 0$ dB. The MIMO transmission capacity gain decreases rapidly and for a quite low value of $L_{ex}$ = 12 dB the average value for the relative MIMO transmission capacity is around 50 %. Beyond $L_{ex}$ 12 dB, the slope is slightly lower. Even for large $L_{ex}$ the MIMO system yields a transmission capacity gain which is likely coming more from diversity which improves MIMO transmission in particular at the cell edge, than from spatial multiplex. Finally, the results shown by graph 10 in Figure 2 verify that a correlation exists between $L_{ex}$ and the MIMO transmission capacity.

The signal-to-noise dependency of the MIMO transmission capacity gain is not shown in the results since it is not such strong, in particular not for low $L_{ex}$. Only in the case of deep NLOS (or large distance), poor signal-to-noise ratios will additionally reduce the MIMO transmission capacity gain.

Alternatively, or supplementary to the channel sounder measurements, the functional relation between the measured transmission capacity gain due to dual-stream MIMO system related to single stream system and the excess path loss can also be determined by LTE throughput measurements.

In LTE field trial network in Frankfurt, those measurements have been performed. This LTE field trial network in Frankfurt consists of 16 sites with 3 sectors each. Basically, it is made up of a target cell in the middle and a surrounding ring of sites generating interference in the target cell. The surrounding sites were selected such that the distribution of the SINR in the target cell can be regarded as typical for urban radio networks.

The LTE field trial network is located in the inner city of Frankfurt near to the financial district. The area has a homogeneous structure with 4 storage buildings. The LTE antennas are equipped with XP antennas and they are mounted only a few meters above the roof tops. Therefore, LOS is unlikely in the target cell. But some special LOS measurements were performed outside the target cell in a long straight and wide street called "Alleen-Ring".

The measurements were carried out at a centre frequency of 2.6 GHz and with a bandwidth of 20 MHz. For the investigations described below, two different network set-ups are regarded: Multi-stream MIMO is enabled, MIMO (including TX diversity) is disabled.

The latter case corresponds with single-input multiple-output (SIMO) since RX diversity in the test mobile is still running. Each measurement was performed at least 2 times in order to increase the reliability. The surrounding sites were equipped with noise generators which were used to perform the measurements with 4 different inter-cell interference powers leading to a wide range of SINR values.

Basically, the evaluation of the LTE drive tests is done by comparing the throughput achieved with multiple-stream MIMO with that one achieved with SIMO. This comparison is done on a point-by-point basis. A measurement point of the MIMO measurement is taken and that measurement point of the SIMO measurement is determined which is closest to the regarded MIMO measurement point. Afterwards, from this pair of MIMO/SIMO measurement points, the throughputs are taken to compute the relative MIMO throughput gain $\Delta R_{MIMO}$ by

$$\Delta R_{MIMO} = \frac{R_{MIMO} - R_{SIMO}}{R_{SIMO}} \bullet 100 \qquad\qquad (5)$$

with

$R_{MIMO}$: throughput if MIMO is running.
$R_{SIMO}$: throughput in the SIMO case.

That definition is very similar to the relative MIMO transmission capacity gain (4) introduced previously. This permits to compare the results of both investigations.

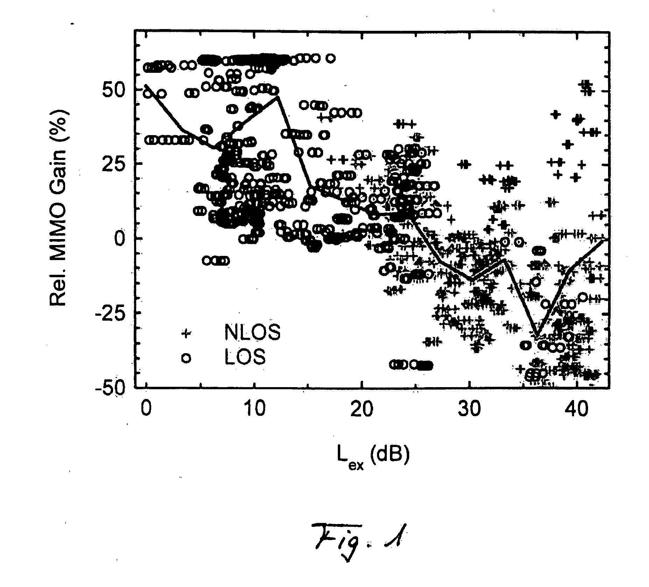

The scatter plot in Figure 1 shows the result of this procedure for one measurement along the Alleen-Ring. The circular markers represent the relative MIMO capacity (throughput) gain $\Delta R_{MIMO}$ in the case of LOS. The LOS check is done in the post process with the radio network planning tool applying 3D building data. Due to hardware restrictions the maximum throughput is 63 Mb/s in the SIMO case and 100 Mb/s in the case of MIMO. Therefore, $\Delta R_{MIMO}$ does not exceed 60 %. This maximum value is achieved for LOS, corresponding with a low value for $L_{ex}$. For $L_{ex} > 20$ dB $\Delta R_{MIMO}$ becomes negative meaning that the throughput with SIMO is greater than with MIMO. For $L_{ex} > 30$ dB $\Delta R_{MIMO}$ even reaches - 50 % which is caused by a very poor SINR. Such extreme poor values occur only due to a specific network set-up in the field trial. However, the scatter plot and in particular the piecewise average in Figure 1 verify that a correlation exists between $\Delta R_{MIMO}$ and $L_{ex}$.

So far, only the correlation between $\Delta R_{MIMO}$ and $L_{ex}$ is regarded without taking into account the dependency of $\Delta R_{MIMO}$ and the SINR. It might be, e.g., that in Figure 1 $\Delta R_{MIMO}$ is large due to large SINR, and at least not only due to low $L_{ex}$ and LOS condition. Indeed, this is one critical point of the LTE drive test investigation. In particular for low $L_{ex}$ the SINR values are only within a very small range since low $L_{ex}$ is given close to the eNodeB antenna where the inter-cell interference is very low. Therefore, even the extreme variation of the inter-cell interference during the measurements has almost no impact on the SINR for locations close to the eNodeB.

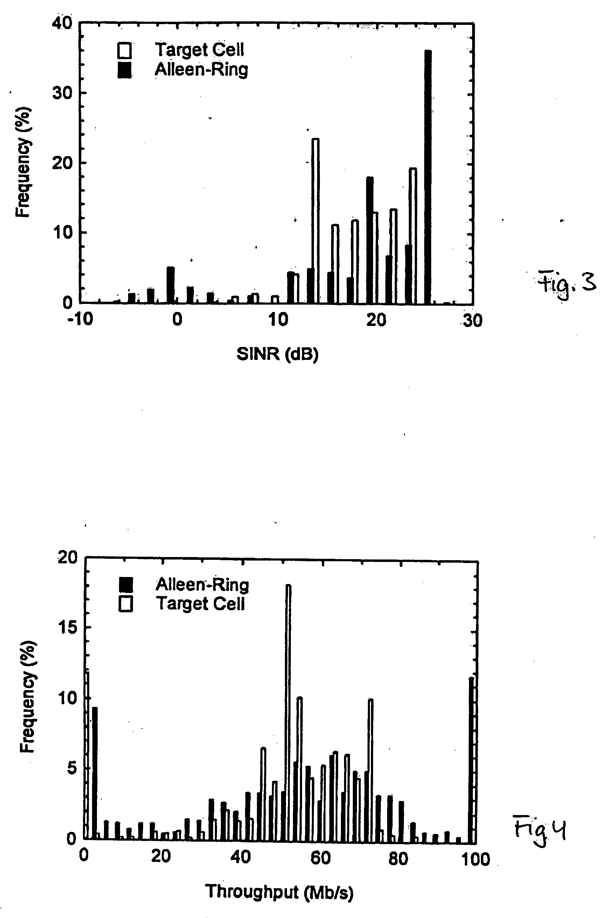

The relation between the SINR and the MIMO throughput is investigated by the statistical evaluation shown in Figure 3 and Figure 4. They show the frequency of the SINR and MIMO throughput of the Alleen-Ring, which is the LOS measurement campaign, and of the target cell with only few LOS measurement points. Comparing the distributions in Figure 3 with the corresponding ones in Figure 4, significant differences are obtained. The target cell as well as the Allen-Ring has a quite high probability for a large SINR in Figure 3, but the target cell has a much lower probability for a high MIMO throughput than the Allen-Ring has. This indicates that for the same SINR different MIMO throughputs are achieved and, in consequence, that the SINR lonely is not sufficient to predict the MIMO throughput in RF planning tools. An additional measure, as the $L_{ex}$, is required.

The piecewise average as in Figure 2 is generated individually for all measurement routes and, for reasons previously discussed, averaged over all SINR values per $L_{ex}$ interval. Taking into account the specific properties of the various measurement routes an over-all relation between the MIMO throughput gain and $L_{ex}$ is derived which is given by graph 20 in Figure 2. The maximum MIMO throughput gain $\Delta R_{MIMO}$ is reached for $L_{ex} = 0$ dB. As mentioned, due to hardware re-. strictions $\Delta R_{MIMO}$ does not exceed 60 % and, therefore, $\Delta R_{MIMO}$ tends asymptotically to 60 % for $L_{ex} < 5$ dB. Up to $L_{ex} = 12$ dB $\Delta R_{MIMO}$ decreases rapidly, but afterwards the slope is quite low.

Figure 2 contains the relative MIMO transmission capacity gain from both, the channel sounder measurement (graph 10) and the LTE drive tests (graph 20), and both differ significantly. Regarding the maximum value, the differences are due to the previously mentioned limitations of the LTE RAN equipment. This is likely also the reason for the different slope for $L_{ex} < 5$ dB since for 5 dB $< L_{ex} < 12$ dB the slope of both graphs is very similar. It's worth to mention that the slopes from both graphs change at around $L_{ex} = 12$ dB and, furthermore, for large $L_{ex}$ the lowest value for the MIMO transmission capacity gain is around 10 % in both investigations. However, over a wide range of $L_{ex}$, the MIMO transmission capacity gain of the LTE field trial is generally lower. One reason might be that the MIMO transmission capacity gain according to (4) is related to SISO (single input single output) but (5) is related to SIMO. Further more, the LTE dive test results include all SINR values whereas the channel sounder measurements results are computed only for SINR = 10dB. The at least temporarily non-perfect running LTE RAN equipment might be a further reason for low MIMO throughput gain.

Finally, the vegetation in the LTE field trial area might also contribute to decrease the MIMO performance. Many large trees are standing in the streets of the target cell and also along the Alleen-Ring the radio path is partly obstructed by trees. According to specific measurements, $\Delta R_{MIMO}$ is reduced by more than 30 % if only trees, but no other obstacles, are standing between RX and TX.

The reasons above for deviating MIMO transmission capacity gains in Figure 1 are realistic but quite hypothetical. They do not allow a clear statement which of both graphs is more precise. Nevertheless, both graphs clearly indicate a correlation between the MIMO performance and $L_{ex}$.

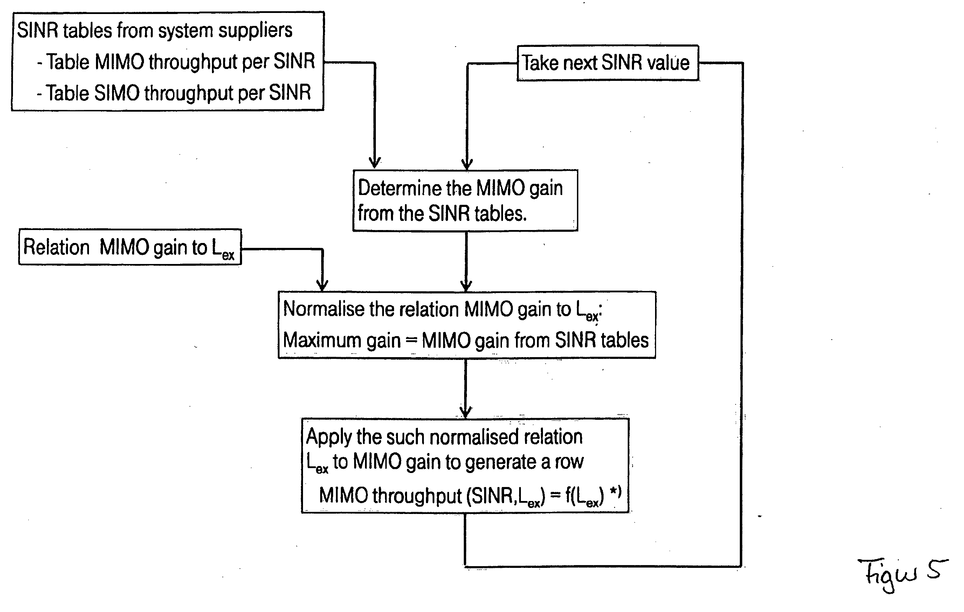

Figure 5 shows a flow-chart which schematically describes how a look-up table can be generated in order to be entered as input in the model so that a MIMO throughput can be predicted by means of a predicted value of the excess path loss $L_{ex}$ and a predicted value of the signal to interference plus noise ratio SINR.

In order to predict the MIMO throughput with the proposed method in a RF planning tool, a suited look-up table has to be generated containing the information "MIMO throughput = f (SINR, $L_{ex}$)". SINR tables are generally given by respective hardware system suppliers. There is a table which describes a mapping between a MIMO throughput and a signal to noise plus interference ratio (SINR) and a table which describes a mapping between a SIMO throughput and a respective signal to interference plus noise ratio. From those tables it is possible to determine for a specific SINR value a respective MIMO gain which is given by:

$$\Delta C_{MIMO} = \frac{C_{MIMO} - C_{\text{single stream}}}{C_{\text{single stream}}} \bullet 100 \; .$$

From respective measurements as described before, for that specific SINR value the functional relation between the MIMO gain as presented by the formula just before to the excess path loss $L_{ex}$ can be derived. Taking both, the functional relation between the measured MIMO gain and the excess path loss and the MIMO gain from the SINR tables, the functional relation between the measured MIMO gain and the excess path loss can be normalised, wherein, for that SINR value, the maximum capacity gain corresponds to a capacity gain as given by the SINR tables. In the next step, such normalised relation between the MIMO gain and the excess path loss is applied to generate a row of the desired look-up table, the row being assigned to that specific SINR value and further comprising as respective column entries values according to: MIMO throughput (SINR, $L_{ex}$) = f ($L_{ex}$), wherein each column being assigned to a specific $L_{ex}$ value. Then, the procedure is repeated for a next SINR value. Finally, a 3D matrix results from which a MIMO throughput can be predicted for a specific SINR value and a specific predicted excess path loss $L_{ex}$.

The procedure is further clarified by the following example. It is assumed that the row in the look-up table for SINR = 15 dB is to be filled. For this SINR, it is given by the SINR tables:

- MIMO throughput = $R_{MIMO}$ = 90 Mb/s
- SIMO throughput = $R_{SIMO}$ = 65 Mb/s

That means the MIMO gain for this case is 38 %. This shall correspond with the maximum MIMO gain of the relative MIMO gain $\Delta C_{MIMO}$ = f ($L_{ex}$) for $L_{ex}$ = 0 dB as found by the measurements. This is reached by the "normalisation" as mentioned in the flow-chart. For the upper limit of the $L_{ex}$ range (e.g. $L_{ex}$ = 30 dB), the MIMO throughput corresponds with the SIMO throughput. The $L_{ex}$ values between those limits are filled according to $\Delta C_{MIMO}$ = f($L_{ex}$). For example, $\Delta C_{MIMO}$ = f ($L_{ex}$ = 10 dB) = 20 %. Than, in the look-up table the MIMO throughput for SINR = 15 dB and $L_{ex}$ = 10 dB corresponds to 65 Mb/s · 1.2 = 78 Mb/s.

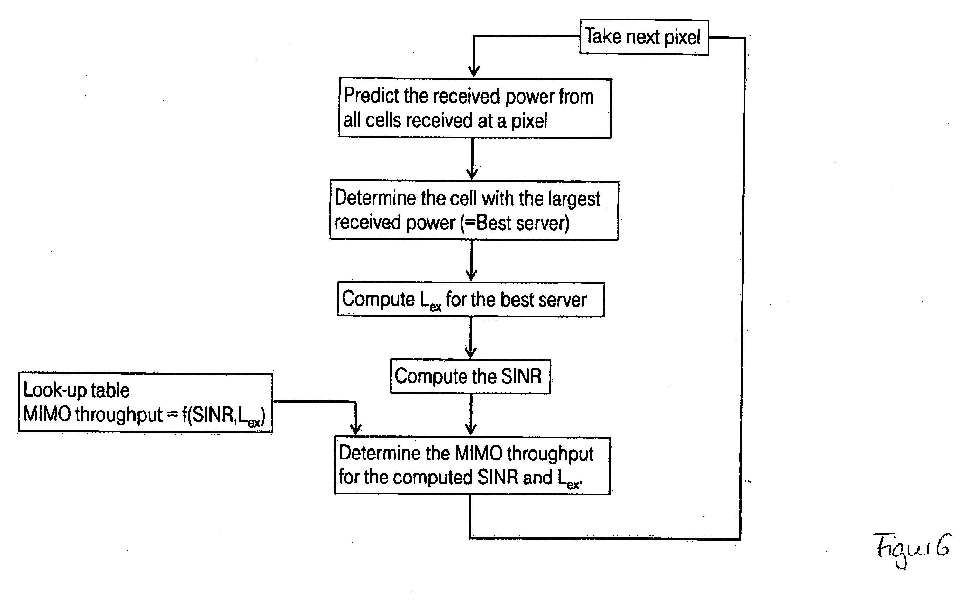

Figure 6 shows a flow-chart predicting the MIMO throughput in an RF planning tool. Regarding a specific pixel in a pregiven prediction area, the pixel representing a mobile station's location, a received power from all cells received at that pixel is predicted. Then, the cell with the largest received power called the best server is determined. For the best server, the excess path loss $L_{ex}$ is computed. The signal to interference plus noise ratio SINR is also computed. Then, those both values are used as input for the proposed model and according to the provided look-up table which contains the functional relation between the MIMO throughput and the excess path loss and the SINR, respectively, the MIMO throughput for the computed SINR and $L_{ex}$ can be determined. Then, a next pixel in the respective pregiven prediction area is taken and the procedure is repeated.

The present invention proposes a model and a respective method to predict the multiple-stream MIMO throughput in radio network planning tools which is based on the path loss difference between an actual path loss and that one of the free space propagation.

In order to determine the functional relationship between the excess path loss and a relative MIMO transmission capacity gain, channel sounder measurements in urban areas were evaluated in order to compute a Shannon capacity of a 2x2 MIMO system with cross-polarised antennas. A measurement shows that the MIMO Shannon capacity is correlated with the excess path loss. In a further step, the MIMO transmission capacity gain which is a Shannon capacity of MIMO related to that one achieved with SISO is computed and a functional relation between this number and $L_{ex}$ is presented.

In a second investigation mobile LTE throughput measurements in LTE field trial network carried out in urban environment are used to verify the results obtained from the channel sounder measurements. The LTE throughput measurements were performed with two different network configurations: 1) dual stream MIMO was enabled and 2) MIMO was disabled and only SIMO was possible. This enables to compute the MIMO throughput gain similar to above which is compared with the MIMO transmission capacity gain from the channel sounder measurements. Although both results differ due, for example, to imperfect LTE RAN equipment and different amount of vegetation in both measurement areas, both investigations indicate clearly that $L_{ex}$ is a suited measure to predict the MIMO throughput in a radio network planning tool. The derived relation between the MIMO transmission capacity gain and $L_{ex}$ can be combined with the SINR to throughput tables as generally used in radio network planning. Therefrom, a precise prediction of the LTE MIMO throughput can be performed.

**Claims**

1. Method for predicting a MIMO throughput of a LTE downlink in a radio network planning tool, the method applying an excess path loss defined as difference of a computed free space path loss and an actual path loss of an electromagnetic wave at a respective mobile station location, establishing a functional relation between the MIMO throughput and the excess path loss, and using as input a transmission capacity gain due to a dual-stream MIMO system related to a single stream system and a pregiven mapping from a signal to interference plus noise ratio to a transmission capacity of the respective single stream system.

2. The method according to claim 1, the method being implemented in the planning tool by entering input files with mapping tables MIMO throughput to excess path loss and signal to interference plus noise ratio, predicting for each pixel in a pre-given prediction area the excess path loss and the signal to interference plus noise ratio and deriving the corresponding MIMO throughput from the mapping tables.

3. The method according to claim 1 or 2 wherein the MIMO throughput in the mapping tables is determined in the radio network planning tool by using a functional relation between the transmission capacity gain due to dual-stream MIMO system related to single stream system and the excess path loss.

4. The method according to claim 3 wherein the functional relation is derived from plotting the transmission capacity gain against the excess path loss.

5. The method according to claim 4 wherein a scatter plot resulting from the plotting is approximated in sections by respective straight lines resulting in the functional relation defined in sections.

6. The method according to any one of claims 3 to 5 wherein the capacity gain is given by

$$\Delta C_{MIMO} = \frac{C_{MIMO} - C_{single\ stream}}{C_{single\ stream}} \bullet 100$$

wherein $C_{MIMO}$ represents the transmission capacity of a MIMO system and $C_{single}$ stream the transmission capacity of a single stream system.

7. The method according to claim 6 wherein the transmission capacity gain is determined on the basis of the Shannon capacity of the MIMO system and the Shannon capacity of the single stream system.

8. The method according to any one of claims 3 to 7 wherein, for respective values of the excess path loss, respective values of the transmission capacity gain are added to respective values of the transmission capacity of a single stream system which are taken from the pregiven mapping.

9. The method according to any one of the preceding claims, wherein the transmission capacity gain is measured.

10. The method according to claim 9 wherein the functional relation between the measured transmission capacity gain due to dual-stream MIMO system related to single stream system and the excess path loss is determined by using MIMO channel sounder measurements and/or LTE throughput measurements.

11. A system component including a model for predicting a MIMO throughout of an LTE downlink in a radio network, the model being implemented in the system component by performing a method according to any one of claims 1 to 10.

12. A radio network planning tool comprising a system component according to claim 11.

13. A computer program product with a computer-readable medium and a computer program stored on the computer-readable medium with a program code which is suitable for carrying out a method according to any one of claims 1 to 10 when the computer program is run on a computer.

14. A computer program with a program code which is suitable for carrying out a method according to any one of claims 1 to 10 when the computer program is run on a computer.

15. A computer-readable medium with a computer program stored thereon, the computer program comprising a program code which is suitable for carrying out a method according to any one of claims 1 to 10 when the computer program is run on a computer.

**Patentansprüche**

1. Verfahren zum Vorhersagen eines MIMO-Durchsatzes eines LTE-Downlinks in einem Funknetzplanungswerkzeug, wobei das Verfahren folgende Schritte aufweist: Anwenden eines überschüssigen Pfadverlusts, der als Differenz eines berechneten Freiraumpfadverlusts und eines tatsächlichen Pfadverlusts einer elektromagnetischen Welle an einem jeweiligen Ort einer Mobilstation definiert ist, Einrichten einer funktionalen Beziehung zwischen dem MIMO-Durchsatz und dem überschüssigen Pfadverlust und Verwenden eines Übertragungskapazitätsgewinns infolge eines Dualstrom-MIMO-Systems in Bezug auf ein Einzelstromsystem und einer vorgegebenen Abbildung von einem Signal-zu-Interferenz-Rausch-Verhältnis auf eine Übertragungskapazität des jeweiligen Einzelstromsystems als Eingabe.

2. Verfahren nach Anspruch 1, wobei das Verfahren in dem Planungswerkzeug durch Folgendes implementiert wird: Eingeben von Eingangsdateien mit Abbildungstabellen zwischen dem MIMO-Durchsatz und dem überschüssigen Pfadverlust und dem Signal-zu-Interferenz-Rausch-Verhältnis, Vorhersagen des überschüssigen Pfadverlusts und des Signal-zu-Interferenz-Rausch-Verhältnisses für jedes Pixel in einem vorgegebenen Vorhersagebereich und Ableiten des entsprechenden MIMO-Durchsatzes anhand der Abbildungstabellen.

3. Verfahren nach Anspruch 1 oder 2, wobei der MIMO-Durchsatz in den Abbildungstabellen im Funknetzplanungswerkzeug durch Verwenden einer funktionalen Beziehung zwischen dem Übertragungskapazitätsgewinn infolge des Dualstrom-MIMO-Systems in Bezug auf ein Einzelstromsystem und dem überschüssigen Pfadverlust bestimmt wird.

4. Verfahren nach Anspruch 3, wobei die funktionale Beziehung anhand einer Auftragung des Übertragungskapazitätsgewinns gegen den überschüssigen Pfadverlust abgeleitet wird.

5. Verfahren nach Anspruch 4, wobei ein Streudiagramm, das sich aus der Auftragung ergibt, in Abschnitten durch jeweilige gerade Linien genähert wird, die zu der in Abschnitten definierten funktionalen Beziehung führen.

6. Verfahren nach einem der Ansprüche 3 bis 5, wobei der Kapazitätsgewinn durch

$$\Delta C_{MIMO} = \frac{C_{MIMO} - C_{Einzelstrom}}{C_{Einzelstrom}} \cdot 100$$

gegeben ist, wobei $C_{MIMO}$ die Übertragungskapazität eines MIMO-Systems darstellt und $C_{Einzelstrom}$ die Übertragungskapazität eines Einzelstromsystems darstellt.

7. Verfahren nach Anspruch 6, wobei der Übertragungskapazitätsgewinn auf der Grundlage der Shannon-Kapazität des MIMO-Systems und der Shannon-Kapazität des Einzelstromsystems bestimmt wird.

8. Verfahren nach einem der Ansprüche 3 bis 7, wobei für jeweilige Werte des überschüssigen Pfadverlusts jeweilige Werte des Übertragungskapazitätsgewinns zu jeweiligen Werten der Übertragungskapazität eines Einzelstromsystems, die der vorgegebenen Abbildung entnommen werden, addiert werden.

9. Verfahren nach einem der voranstehenden Ansprüche, wobei der Übertragungskapazitätsgewinn gemessen wird.

10. Verfahren nach Anspruch 9, wobei die funktionale Beziehung zwischen dem gemessenen Übertragungskapazitätsgewinn infolge des Dualstrom-MIMO-Systems in Bezug auf das Einzelstromsystem und dem überschüssigen Pfadverlust unter Verwendung von MIMO-Kanal-Sondenmessungen und/oder LTE-Durchsatzmessungen bestimmt wird,

**11.** Systemkomponente mit einem Modell zum Vorhersagen eines MIMO-Durchsatzes eines LTE-Downlinks in einem Funknetz, wobei das Modell in der Systemkomponente durch Ausführen eines Verfahrens nach einem der Ansprüche 1 bis 10 implementiert ist.

**12.** Funknetzplanungswerkzeug mit einer Systemkomponente nach Anspruch 11.

**13.** Computerprogrammprodukt mit einem computerlesbaren Medium und einem auf dem computerlesbaren Medium gespeicherten Computerprogramm mit einem Programmcode, der geeignet ist, um ein Verfahren nach einem der Ansprüche 1 bis 10 auszuführen, wenn das Computerprogramm auf einem Computer ausgeführt wird.

**14.** Computerprogramm mit einem Programmcode, der geeignet ist, um ein Verfahren nach einem der Ansprüche 1 bis 10 auszuführen, wenn das Computerprogramm auf einem Computer ausgeführt wird.

**15.** Computerlesbares Medium mit einem darauf gespeicherten Computerprogramm, wobei das Computerprogramm einen Programmcode aufweist, der geeignet ist, um ein Verfahren nach einem der Ansprüche 1 bis 10 auszuführen, wenn das Computerprogramm auf einem Computer ausgeführt wird.

**Revendications**

**1.** Procédé pour prédire un débit MIMO d'une liaison descendante LTE dans un outil de planification de réseau radio, le procédé appliquant un affaiblissement sur un trajet en excès défini comme la différence d'un affaiblissement sur un trajet en espace libre calculé et un affaiblissement sur un trajet réel d'une onde électromagnétique à un emplacement de station mobile respective, l'établissement d'une relation fonctionnelle entre le débit MIMO et l'affaiblissement sur le trajet en excès, et utilisant en entrée un gain de capacité de transmission dû à un système MIMO à double flux associé à un système de flux unique et un mappage prédéfini d'un rapport signal sur interférence plus bruit à une capacité de transmission du système de flux unique respectif.

**2.** Procédé selon la revendication 1, le procédé étant mis en oeuvre dans l'outil de planification en entrant des fichiers d'entrée avec de tables de mappage entre le débit MIMO et l'affaiblissement sur le trajet en excès et le rapport signal sur interférence plus bruit, en prévoyant pour chaque pixel dans une zone de prédiction prédéfinie l'affaiblissement sur le trajet en excès et le rapport signal sur interférence plus bruit et en dérivant le débit MIMO correspondant à partir des tables de mappage.

**3.** Procédé selon la revendication 1 ou 2, dans lequel le débit MIMO dans les tables de mappage est déterminé dans l'outil de planification de réseau radio en utilisant une relation fonctionnelle entre le gain en capacité de transmission dû à un système MIMO double flux associé à système de flux unique et l'affaiblissement sur le trajet en excès.

**4.** Procédé selon la revendication 3, dans lequel la relation fonctionnelle est dérivée du tracé de gain de capacité de transmission vis-à-vis de l'affaiblissement sur le trajet en excès.

**5.** Procédé selon la revendication 4, dans lequel un nuage de points résultant du tracé est approché en sections par des lignes droites respectives résultant de la relation fonctionnelle définie en sections.

**6.** Procédé selon l'une quelconque des revendications 3 à 5, dans lequel le gain de capacité est donné par

$$\Delta C_{MIMO} = \frac{C_{MIMO} - C_{single\ stream}}{C_{single\ stream}} \bullet 100$$

dans lequel $C_{MIMO}$ représente la capacité de transmission d'un système MIMO et $C_{single\ stream}$ la capacité de transmission d'un système de flux unique.

**7.** Procédé selon la revendication 6, dans lequel le gain de capacité de transmission est déterminé sur la base de la capacité de Shannon du système MIMO et de la capacité de Shannon du système de flux unique.

**8.** Procédé selon l'une quelconque des revendications 3 à 7, dans lequel, pour des valeurs respectives de l'affaiblissement sur le trajet en excès, des valeurs respectives du gain de capacité de transmission sont ajoutées à des valeurs respectives de la capacité de transmission d'un système de flux unique qui sont extraites du mappage prédéfini.

**9.** Procédé selon l'une quelconque des revendications précédentes, dans lequel le gain de capacité de transmission est mesuré.

**10.** Procédé selon la revendication 9, dans lequel la relation fonctionnelle entre le gain de capacité de transmission mesuré dû au système MIMO double flux associé à un système de flux unique et l'affaiblissement sur le trajet en excès est déterminée en utilisant des mesures de sondeur de canal MIMO et/ou des mesures de débit LTE.

**11.** Composant de système comprenant un modèle pour prédire un débit MIMO d'une liaison descendante LTE dans un réseau radio, le modèle étant implémenté dans le composant de système en mettant en oeuvre un procédé selon l'une quelconque des revendications 1 à 10.

**12.** Outil de planification de réseau radio comprenant un composant de système selon la revendication 11.

**13.** Produit de programme informatique avec un support lisible par ordinateur et un programme informatique mémorisé sur le support lisible par ordinateur avec un code de programme qui est approprié pour la mise en oeuvre d'un procédé selon l'une quelconque des revendications 1 à 10 lorsque le programme informatique est exécuté sur un ordinateur.

**14.** Programme informatique avec un code de programme qui est approprié pour la mise en oeuvre d'un procédé selon l'une quelconque des revendications 1 à 10 lorsque le programme informatique est exécuté sur un ordinateur.

**15.** Support lisible par ordinateur avec un programme informatique mémorisé sur celui-ci, le programme informatique comprenant un code de programme qui est approprié pour la mise en oeuvre d'un procédé selon l'une quelconque des revendications 1 à 10 lorsque le programme informatique est exécuté sur un ordinateur.

Fig. 1

EP 2 557 830 B1

Fig. 2

Fig. 3

Fig 4

SINR tables from system suppliers
- Table MIMO throughput per SINR
- Table SIMO throughput per SINR

Take next SINR value

Determine the MIMO gain from the SINR tables.

Relation MIMO gain to $L_{ex}$

Normalise the relation MIMO gain to $L_{ex}$:
Maximum gain = MIMO gain from SINR tables

Apply the such normalised relation $L_{ex}$ to MIMO gain to generate a row

MIMO throughput $(SINR, L_{ex}) = f(L_{ex})$ *)

Figur 5

19

Take next pixel

Predict the received power from all cells received at a pixel

Determine the cell with the largest received power (=Best server)

Compute $L_{ex}$ for the best server

Compute the SINR

Look-up table
MIMO throughput = $f(SINR, L_{ex})$

Determine the MIMO throughput for the computed SINR and $L_{ex}$.

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2341646 A1

**Non-patent literature cited in the description**

- **K. WERNER et al.** Antenna Configurations for 4x4 MIMO in LTE-Field measurements. *Proc. IEEE Vehic. Tech. Conf.,* 2010
- **V. ERCEG et al.** Multiple-Input Multiple-Output Fixed Wireless Radio Channel Measurements and Modeling Using Dual-Polarized Antennas at 2.5 GHz. *IEEE Trans. on Wireless Communications,* November 2004, vol. 3 (6), 2288-2298
- **S. KWON ; G. STÜBER.** 3-D Geometry-based Statistical Modeling of Cross-Polarization Discrimination in Wireless Communication Channels. *Proc. IEEE Vehic. Tech. Conf.,* 2010
- *IEEE Trans. on Wireless Communications,* November 2004, vol. 3 (6), 2288-2298
- **A. MOLISCH.** A generic model for MIMO wireless propagation channels in Macro- and Microcells. *IEEE Trans. on Signal Processing,* January 2004, vol. 52 (1), 61-71

- *LTE Radio Network Planning with PegaPlan,* 2010, www.pegaware.com
- **J. BEYER ; R. JACOBY.** Two semi-empirical and fast prediction models for urban microcells compared with measurements at 919 and 1873 MHz. *The second European Personal Mobile Communications Conference,* October 1997
- **J. BEYER ; H. DROSTE.** A measurement based approach to spatially predict the orthogonality factor of the UMTS downlink. *Proc. IEEE Vehic. Tech. Conf.,* 2010
- Multidimensional High-Resolution Channel Sounder Measurement. **R. S. THOMÄ et al.** Smart Antennas in Europe, State-of-the-Art. Hindawi Publishing Corporation, 2005, vol. 3
- **B. HOLTER.** On the capacity of the MIMO channel: A tutorial introduction. *Proc. of IEEE Norewgian Symposium on Signal Processing,* 2001, 167-172